# EUROPÄISCHE PATENTSCHRIFT

(11) **EP 0 566 907 B1**
(45) Veröffentlichungstag und Bekanntmachung des Hinweises auf die Patenterteilung: **05.06.1996**
(21) Anmeldenummer: 93105299.7
(22) Anmeldetag: 30.03.1993
(51) Int. Cl.: C25C 7/00, C02F 1/461

(54) **Elektrolyseapparat mit Partikelkathoden**
Electrolyzer with particulate cathodes
Electrolyseur avec cathodes particulaires

(30) Priorität: 30.03.1992 DE 4210917
(43) Veröffentlichungstag der Anmeldung: 27.10.1993
(73) Patentinhaber: Rittel, Andreas, Dr.-Ing., 06369 Grossbadegast (DE); Bergmann, Henry, Dr.-Ing., 06366 Köthen (DE); Hertwig, Klaus, Prof. Dr.-Ing. habil., 06366 Köthen (DE)
(72) Erfinder: Rittel, Andreas, Dr.-Ing., 06369 Grossbadegast (DE); Bergmann, Henry, Dr.-Ing., 06366 Köthen (DE); Hertwig, Klaus, Prof. Dr.-Ing. habil., 06366 Köthen (DE)
(74) Vertreter: Münich, Wilhelm, Dr.

(56) Entgegenhaltungen:
- DE-A- 4 037 041
- FR-A- 2 645 526

## Beschreibung

Die Erfindung bezieht sich auf einen Elektrolyseapparat, der aus mindestens zwei bewegten Partikelkathoden und mindestens einer Anode besteht.

Derartige Elektrolyseapparate sind insbesondere bei Elektrolyseprozessen mit Partikelelektroden anwendbar, deren Volumen sich durch Metallabscheidung ständig vergrößert. Ein hierbei typisches Anwendungsgebiet ist die elektrochemische Metallabscheidung aus Abwässern; Partikelelektroden werden eingesetzt, um durch deren hohe spezifische Oberfläche günstige Abscheidebedingungen bei stofftransportgehemmten Elektrolysesystemen zu erreichen. Diese liegen insbesondere bei geringen Depolarisatorkonzentrationen vor, wie es bei der Schwermetallentfernung aus Abwässern der Fall ist. Darüberhinaus ist die Erfindung ebenso anwendbar bei der kontinuierlichen Metallraffination, wenn Metallgranalien erhalten werden sollen.

Entsprechend dem in der Galvanotechnik üblichen Prinzip, nämlich der Verwendung von rotierenden Trommeln zur Beschichtung von Kleinteilen, gibt es eine große Anzahl von Konstruktionen:

So verwendet Kammel (Galvanotechnik 69(1978)687) eine Wälzrohrzelle, bei der sich in einer von Gegenelektroden umgebenen perforierten Trommel eine Partikelschüttung befindet.

Eine Zelle mit kontinuierlicher Partikelzu- bzw. -abführung ist in der DD-PS 2 15 098 beschrieben. Die Austraggranalien fallen hierbei über ein Rohr auf den Boden einer nur gering gefüllten, geneigten, zylindrischen Konstruktion. Der Austrag erfolgt über Schneckenförderer.

Weiterhin wird in der DD-PS 2 89 902 eine Vorrichtung beschrieben, die einen Trommelfüllungsgrad größer als 0,5 gestattet. Hierbei liegt die Anode außerhalb der Kathodentrommel und der Strom tritt von der Stirnseite in die Trommel ein. Der Antrieb der Trommel erfolgt von oben über einen Keilriemen oder ein Zahnrad.

Der Erfindung liegt die Aufgabe zugrunde, einen Elektrolyseapparat anzugeben, der sich insbesondere durch folgende Merkmale auszeichnet:
- die Möglichkeit einer kompakten, kaskadenförmigen Anordnung der Kathodentrommeln zum Zwecke eines stufenweisen Konzentrationsabbaus,
- eine hohen Füllungsgrad der Kathodentrommeln,
- die Möglichkeit einer kontinuierlichen Metallabscheidung über lange Betriebszeiten ohne Wechsel der Kathoden,
- die Möglichkeit der Zugabe kleiner Startgranalien,
- eine interne Selbstklassierung der Partikeln nach der Größe sowie einen selbsttätigen Partikelaustrag ohne bewegliche Teile, wie Greifer, andere Austragsvorrichtungen oder Siebe,
- eine Trennung der Elektrolyträume und getrennte Abführung der Elektrolysegase,
- die Beherrschung der durch die Metallgranalien hervorgerufenen Dichtungsprobleme auch bei langen Betriebszeiten,
- eine einfach zu realisierende und sichere stromübertragung auf rotierende Teile,
- einen vertretbaren Aufwand bei der Montage und dem Service.

Erfindungsgemäß wird diese Aufgabe durch den Gegenstand des Anspruchs 1 gelöst. Weiterbildungen der Erfindung sind in den Ansprüchen 2 - 12 angegeben.

Bei dem Apparat gemäß Anspruch 1 sind mehrere abwechselnd hintereinander angeordnete Partikelkathoden und Anoden vorgesehen. Die Kathoden befinden sich in Kathodentrommeln, die auf einer Achse oder Welle angeordnet sind. Jeweils benachbarte Kathodentrommeln sind durch Kanäle verbunden, während sich an der Innenseite eines Zeilendeckels und/oder in mindestens einer Kathodentrommel eine elektrische Kontaktvorrichtung befindet.

Bevorzugt besteht der Elektrolyseapparat aus mehreren abwechselnd hintereinander angeordneten Kathodentrommeln mit dazwischen angeordneten Anodenelementen, während sich in jedem Kathodenelement eine auf einer gemeinsamen Weile befestigte Trommel befindet, die zur Aufnahme der Kathodenpartikeln dient. Die Kathodentrommeln können zu mehr als der Hälfte mit Kathodenpartikeln und Katholytflüssigkeit gefüllt sein, wobei jeweils benachbarte Kathodentrommeln bei großem Abstand von der Rotationsachse und/oder bei kleinem Abstand von der Rotationsachse der Trommeln derart durch Kanäle verbunden sind, daß diese Kanäle über ihre Länge einen veränderlichen Abstand zur Rotationsachse und/oder einen zur Rotationsachse gewundenen Verlauf - z.B. einen konischen Verlauf - aufweisen. Zwischen den Zellendeckeln und den sich unmittelbar daneben befindenden Kathodentrommeln an der Welle und am Trommelmantel befinden sich Dichtungen, während sich in den Kathodentrommeln zentrisch angeordnete, elektrisch leitfähige Scheiben befinden, die getrennt für sich oder elektrisch miteinander verbunden den Kathodenanschluß der Zelle bilden. Alternativ kann der Kathodenanschluß der Zelle an der Innenseite verbunden sein.

Die Anoden oder Kathoden können elektrisch mit der Welle verbunden sein, wobei der anodische oder kathodische Stromanschluß auf die Welle über eine drehbare Kontaktvorrichtung erfolgt.

An der Innenseite der Wandung der elektrolyteintrittsseitigen Kathodentrommel können sich axial gewundene Leitbleche befinden, während am elektrolyteintrittsseitigen Zellendeckel Zu- und Abführeinrichtungen für die Kathodenpartikeln und an den Zellendeckeln oder dem Zellenmantel Zu- und Abführeinrichtungen für die Elektrolyte und Abführeinrichtungen für die Elektrolysegase angebracht sein können.

Der Vorteil des Einsatzes bewegter Partikelelektroden ergibt sich aus der Tatsache, daß ruhende Partikel bei Metallabscheidung zusammenwachsen und das Elektrodenbett nach einer bestimmten Betriebszeit erneuert werden muß. Bekannte Kontruktionen benutzen das Vibrations- und das Wirbelbettprinzip, auch eine mechanische Rührung der Partikelschüttung ist möglich.

Die vorteilhafte Wirkung der Erfindung besteht zum einen in einer Stufenweisen Reduzierung der Depolarisatorkonzentration des Elektrolyten in den hintereinandergeschalteten Kathodentrommeln. Dabei gelangt der Elektrolyt durch jedes Partikelbett und tritt gemeinsam mit dem Katholytgas über die Verbindungskanäle in die nächste Kathodentrommel ein. Zum anderen wird die Volumenvergrößerung des Kathodenbettes, hervorgerufen durch die gewollte Metallabscheidung, derart ausgeglichen, daß sich durch die ständige Drehbewegung der Kathodentrommeln (analog dem Prinzip kommunizierender Röhren) Über die Verbindungskanäle in allen Trommeln ein gleicher Partikelstand einstellt. Überschreitet der Partikelstand in der Zelle die Höhe des Partikelaustrittsstutzens, so gelangen die Überzähligen Partikeln durch diesen aus der Zelle. Das bei rotierenden Trommelelektrolyseuren mit Partikelelektroden und kontinuierlichem Partikelaustrag zwangsläufig auftretende Problem der Abdichtung zwischen rotierenden und feststehenden Teilen bei Partikelkontakt wird durch den kompakten, kaskadenförmigen Aufbau derart gemindert, daß diese Abdichtung nur noch in einer Randzelle (Kathodentrommel an der Elektrolyteintrittsseite) erforderlich ist. Alle anderen Trommeln bestehen nur aus rotierenden Teilen.

Durch die erfindungsgemäße Gestaltung und Anordnung der Verbindungskanäle zwischen den Kathodentrommeln erfolgt eine Fraktionierung der Partikeln nach ihrer Größe, so daß sich auf der Elektrolytaustrittsseite bevorzugt kleine und auf der Ellektrolyteintrittsseite bevorzugt große Partikeln aufhalten. Durch den weitestgehenden Ausschluß von Problemen der Partikelabdichtung zwischen rotierenden und ruhenden Zellenteilen und der Fraktionierung der Kathodenpartikeln kann auch sehr feinkörniges Partikelmsterial eingesetzt werden. Dies begünstigt die Abscheideleistung bei geringen Metallkonzentrationen.

Die Erfindung wird nachstehend anhand der Zeichnung näher beschrieben, in der zeigen:
- Fig. 1: einen Längsschnitt eines erfindungsgemäßen Elektrolyseapparates, und
- Fig. 2 bis 4: diverse Ansichten.

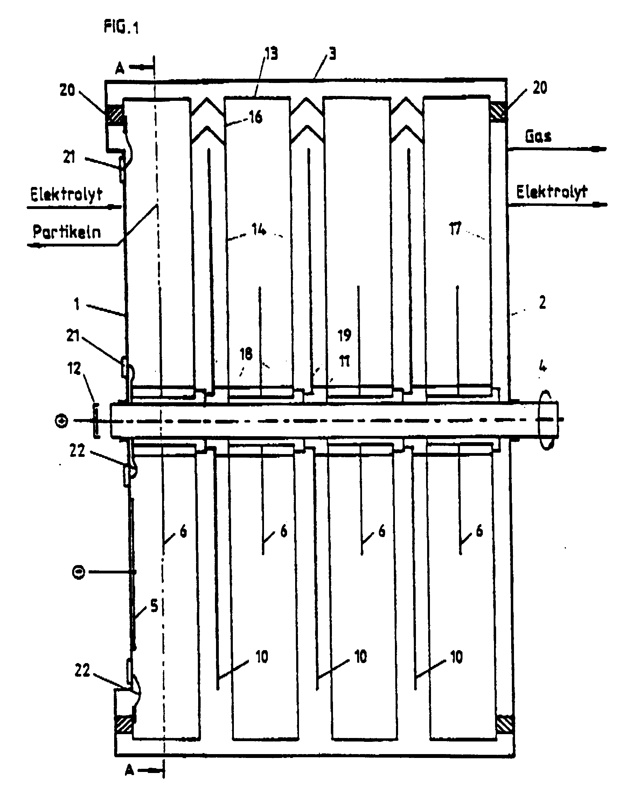

Fig. 1 zeigt einen Längsschnitt durch einen erfindungsgemäßen Elektrolyseapparat, der ein aus zwei Zellendekkeln 1,2 und einem Mantelrohr 3 bestehendes Zellengehäuse aufweist; auf einer von außen angetriebenen Welle 4 sind vier Kathodentrommeln 13, die der Aufnahme der Kathodenpartikeln 9 dienen, mit dazwischen angebrachten Anoden 10 angeordnet.

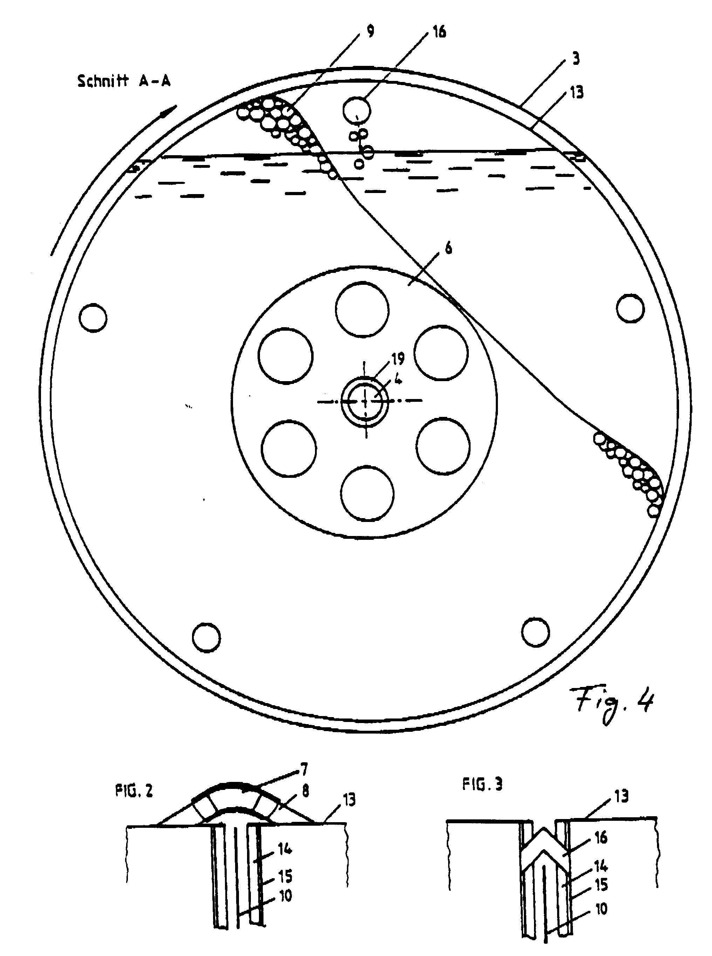

Jeweils benachbarte Kathodentrommeln sind durch Kanäle 16 derart miteinander verbunden, daß durch diese ein Austausch des Katholyten, des Kathodengases und der Partikeln erfolgt. Die Verbindungskanäle sind so gestaltet, daß bei vorgegebener Drehrichtung die sich zwangsläufig im äußeren Teil der Trommel (maximaler Radius) ansammelnden großen Partikeln in Richtung der Seite des Elektrolyteintrittes und die sich im inneren Teil der Trommel (minimaler Radius) sammelnden kleinen Partikeln in Richtung der Seite des Elektrolytaustrittes transportiert werden. Mögliche Ausführungsformen dieser Verbindungskanäle sind auf der Mantelfläche der Trommel unter einem Winkel zur Rotationsachse schräg angebrachte Stutzen 8, die paarweise durch z. B. Schläuche 7 miteinander verbunden sind (Fig. 2) oder zwischen den Seitenwänden 14 der Kathodentrommeln angebracht (Fig. 3), dargestellt.

Der Transport durch diese Kanäle erfolgt durch einen gekrümmten Verlauf in Längsrichtung derart, daß an einer Stelle zwischen zwei Trommeln der Abstand zwischen der Kanalachse und der Rotationsachse ein Maximum einnimmt und/oder die direkte Verbindungslinie der Mündungen eines Kanales in beide Kathodentrommeln mit der Rotationsachse einen Winkel bildet. Bei jeder Trommeldrehung werden die Kanäle einmal gefüllt und wieder entleert. Unterschiedliche Füllungs- und Entleerungszeitpunkte bewirken den gerichteten Transport der Partikeln.

Die Wandungen der Kathodentrommeln bestehen auf ihrer Innenseite aus einem Diaphragma und/oder einer Ionenaustauschmembran 15 und zur Erzielung einer hohen Stabilität bei einem gleichzeitig geringen Elektrolytwiderstand zwischen Anode und Kathodenbett auf der Außenseite aus einer grobgelochten Platte 14. Die an der Elektrolytaustrittsseite sich befindliche Wand der äußeren Kathodentrommel enthält eine poröse Schicht 17, die eine Durchströmung von Elektrolyt und Kathodengas ermöglicht.

Die an der Elektrolyteintrittsseite sich befindende Kathodentrommel ist zum Zellendeckel 1 hin offen. Die Metallpartikeln werden sowohl am inneren als auch am äußeren Teil der Trommel durch verschleißarme Dichtungen, im Ausführungsbeispiel bestehend aus feststehenden Glasringen 21 und federnden, rotierenden Ringen 22, von dahinter angebrachten Dichtungen 20 (Rund- oder Radialvellendichtringe) ferngehalten. In dem dazwischen verbleibenden Kreisring des Zellendeckels befinden sich die Stutzen für den Elektrolyteintritt und die Zuführung der Startgranalien, der Austrag der gewachsenen Partikeln und bei einem festen Kathodenanschluß eine Kontaktplatte 5. In diesem Fall werden die übrigen Partikelkathoden 9 über die darin angeordneten, elektrisch miteinander verbundenen Scheiben 6 kathodisch polarisiert. Bei einem direkten kathodischen Anschluß der Scheiben in den Kathodentrommeln entfällt die feststehende Kontaktplatte. Dies hat den Vorteil im Falle des Vorliegens hoher Depolarisatorkonzentrationen, bei denen metallische Abscheidungen bereits an der Kontaktplatte den Langzeitbetrieb stören können.

Die Anoden sind auf Anodenringen 11 befestigt, über die sie mit der Welle 4 elektrisch verbunden sind. Die Übertragung des Stromes auf die Welle erfolgt schleifringlos. Bewährt haben sich als Kontaktvorrichtung 12 vollkommen wartungsfreie, geschlossene Quecksilber-Drehübertrager. Bei einem direkten kathodischen Anschluß der Scheiben 6 in den Kathodentrommeln ist die Verwendung mehrkanaliger Drehübertrager möglich, oder der Stromanschluß erfolgt von beiden Seiten der Welle, wobei in diesem Fall eine Hohlwelle verwendet werden muß.

In folgender Tabelle werden Parameter und Meßwerte eines Ausführungsbeispiels dargelegt:

| | |
|---|---|
| Anzahl der Kathodentrommeln | 5 |
| Durchmesser der Kathodentrommeln | 250mm |
| Breite der Kathodentrommeln | 60mm |
| Partikeldurchmesser | 3mm |
| Trommelfüllungsgrad | 2/3 |
| Trommeldrehzahl | 2min⁻¹ |
| Elektrolyt | CuSo₄/H_{z} SO₄ |

| Durchsatz l/h | Strom A | Cu-Konz.Eintritt mg/l | Cu-Konz.Austritt mg/l |
|---|---|---|---|
| 12,5 | 50 | 4800 | 1150 |
| 57,1 | 25 | 1800 | 1325 |
| 15,4 | 50 | 1650 | 10 |
| 24,6 | 20 | 910 | 1 |
| 56,2 | 50 | 435 | <0,1 |
| 60,0 | 20 | 135 | <0,1 |

## Patentansprüche

1. Elektrolyseapparat, bestehend aus mindestens zwei bewegten Partikelkathoden (9) und mindestens einer Anode (10), dadurch **gekennzeichnet**, daß mehrere abwechselnd hintereinander angeordneten Partikelkathoden (9) und Anoden (10) vorgesehen sind,
daß die Kathoden sich in Kathodentrommeln (13) befinden, die auf einer Achse oder Welle (4) angeordnet sind, und daß jeweils benachbarte Kathodentrommeln (13) durch Kanäle (16) verbunden sind, und sich an der Innenseite eines Zellendeckels (1,2) und/oder in mindestens einer Kathodentrommel (13) eine elektrische Kontaktvorrichtung (5,6) befindet.

2. Elektrolyseapparat nach Anspruch 1,
**gekennzeichnet** dadurch, daß die Kathodentrommeln beidseitig durch Wände (14) begrenzt sind, die auf der Innenseite aus einer feinporigen oder einer ionenaustauschselektiven Schicht (15) und auf der Außenseite aus einer grobgelochten Schicht (14) bestehen.

3. Elektrolyseapparat nach Anspruch 1,
**gekennzeichnet** dadurch, daß beim Vorhandensein einer am Zellendeckel (1,2) befestigten Kontaktvorrichtung (5) die sich unmittelbar daran anschließend Kathodentrommel (13) zum Zellendeckel (1,2) hin offen ist und zum Anodenraum hin eine elektrisch isolierende Seitenwand besitzt.

4. Elektrolyseapparat nach Anspruch 1,
**gekennzeichnet** dadurch, daß die Kanäle (16) eine lichte Weite von mindestens dem zweiflachen Durchmesser der größten Kathodenpartikeln (9) aufweisen und vorzugsweise in zwei verschiedenen Abständen von der Rotationsachse, angeordnet sind.

5. Elektrolyseapparat nach Anspruch 1,
**gekennzeichnet** dadurch, daß die Kanäle (16) parallel zur Rotationsachoe angeordnet sind und einen vorzugsweise kreisförmigen, konisch erweiterten Querschnitt aufweisen.

6. Elektrolyseapparat nach Anspruch 1,
**gekennzeichnet** dadurch, daß die Kathodentrommeln (13) durch Hohlzylinder (18) auf der Achse oder Welle (4) befestigt sind, auf denen sich die elektrischen Kontaktvorrichtungen (5,6) in den Kathodentrommeln befinden.

7. Elektrolyseapparat nach Anspruch 1,
**gekennzeichnet** dadurch, daß sich im elektrolyteintrittseitigen Zellendeckel (1) ein nach außen abfallender Kanal befindet.

8. Elektrolyseapparat nach Anspruch 1,
**gekennzeichnet** dadurch, daß sich an der Innenseite der Wandung der elektrolyteintrittsseitigen Kathodentrommel (13) axial gewundene Leitbleche befinden.

9. Elektrolyseapparat nach Anspruch 1,
**gekennzeichnet** dadurch, daß die elektrischen Kontaktvorrichtungen (5,6) in den Kathodentrommeln untereinander und/oder mit einer auf der Welle befestigten Kontaktvorrichtung (12) elektrisch verbunden sind.

10. Elektrolyseapparat nach Anspruch 1,
**gekennzeichnet** dadurch, daß sich in den Kathodentrommeln (13) Scheiben (6) mit einem Radius, der kleiner oder gleich dem Minimum der kleinsten Abstände zwischen der Rotationsachse und der Elektrolytoberfläche und zwischen der Rotationsachse und der Oberfläche der Kathodenpartikelschüttungen (9) ist, befinden.

11. Elektrolyseapparat nach Anspruch 1,
**gekennzeichnet** dadurch, daß der größte Durchmesser der Poren in der feinporigen Schicht (15) der seitlichen Begrenzung der Kathodentrommeln (13) kleiner ist als der Durchmesser der kleinsten im Anoden- und Kathodenraum abgeschiedenen Gasblasen.

12. Elektrolyseapparat nach den Ansprüchen 1 und 2,
**gekennzeichnet** dadurch, daß die sich unmittelbar am Elektrolytaustritt der Zeile befindende Trommelwand (17) einen Porendurchmesser aufweist, der kleiner als der der kleinsten Kathodenpartikeln ist.

## Claims

1. Electrolyzer consisting of at least two moving particulate cathodes (9) and at least one anode (10),
**characterized** in that a plurality of particulate cathodes (9) and anodes (10) is provided in alternating tandem arrangement,
that said cathodes are located in cathode drums (13) disposed on a shaft (4), and that cathode drums (13) respectively adjacent to each other are interconnected by passages (16) and an electrical contact means (5, 6) is provided on the inside of a cell cover (1, 2) and/or in at least one cathode drum (13).

2. Electrolyzer according to Claim 1,
**characterized** in that said cathode drums are defined on both sides by walls (14) consisting of a microporous layer or an ion-exchange selective layer (15) on the inside and of a coarsely perforated layer (14) on the outside.

3. Electrolyzer according to Claim 1,
**characterized** in that when a contact means (5) is fastened on said cell cover (1, 2) the cathode drum (13) immediately joining it is open toward said cell cover (1, 2) and presents an electrically insulating side wall toward the anode space.

4. Electrolyzer according to Claim 1,
**characterized** in that said passages (16) have an inside width corresponding at least to the double of the diameter of the largest cathode particles (9) and are preferably disposed at two different spacings from the axis of rotation.

5. Electrolyzer according to Claim 1,
**characterized** in that said passages (16) are disposed in parallel to the axis of rotation and present a preferably circular, conically flaring cross section.

6. Electrolyzer according to Claim 1,
**characterized** in that said cathode drums (13) are fastened via hollow cylinders (18) on said shaft (4), on which cylinders are provided said electrical contact means (5, 6) in said cathode drums.

7. Electrolyzer according to Claim 1,
**characterized** in that an outwardly descending passage is located in the cell cover (1) on the electrolyte supply side.

8. Electrolyzer according to Claim 1,
**characterized** in that axially wound sheet deflectors are provided on the inside of the wall of said cathode drum (13) on the electrolyte supply side.

9. Electrolyzer according to Claim 1,
**characterized** in that said electrical contact means (5, 6) in said cathode drums are electrically interconnected with each other and/or electrically connected to a contact means (12) fastened on said shaft.

10. Electrolyzer according to Claim 1,
**characterized** in that disks (6) are provided in said cathode drums (13), which have a radius smaller than or equal to the minimum of the shortest distances between the axis of rotation and the electrolyte surface and between the axis of rotation and the surface of the cathode particle dumps (9).

11. Electrolyzer according to Claim 1,
**characterized** in that the largest diameter of the pores in said microporous layer (15) on the lateral wall defining said cathode drums (13) is smaller than the diameter of the smallest gas bubbles separated in the anode and cathode space.

12. Electrolyzer according to Claims 1 and 2,
**characterized** in that the drum wall (17) located directly at the electrolyte discharge point of the cell presents a pore diameter smaller than the diameter of the smallest cathode particles.

## Revendications

1. Electrolyseur consistant en au moins deux cathodes particulaires mobiles (9) et au moins une anode (10),
**caractérisé** en ce qu'une pluralité de cathodes particulaires (9) et anodes (10) est prévue, à tour de rôle, l'une derrière l'autre,
que lesdites cathodes sont disposées dans des tambours cathodiques (13) disposés sur un axe ou arbre (4), et
en ce que des tambours cathodiques (13) respectivement voisins l'un à l'autre sont interconnectés moyennant des conduits (16), et un moyen de contact électrique (5, 6) est prévu à la face interne d'un couvercle de la cellule (1, 2) et/ou dans au moins un desdits tambours cathodiques (13).

2. Electrolyseur selon la revendication 1,
**caractérisé** en ce que lesdits tambours cathodiques sont limités aux deux côtés par des parois (14) qui consistent en une couche aux micropores ou une couche (15) sélective en échange d'ions sur la face interne, et en une couche à grosses perforations (14) sur la face extérieure.

3. Electrolyseur selon la revendication 1,
**caractérisé** en ce que si un moyen de contact (5) est fixé sur ledit couvercle de la cellule (1, 2), le tambour cathodique (13) qui y suive directement est ouvert vers ledit couvercle de la cellule (1, 2) et présente une paroi latérale électriquement isolante vers l'espace anodique.

4. Electrolyseur selon la revendication 1,
**caractérisé** en ce que lesdits conduits (16) ont une largeur intérieure, qui correspond au moins au double diamètre des particules cathodiques (9) les plus grandes, et qu'ils sont disposés, de préférence, à deux écarts différents de l'axe de rotation.

5. Electrolyseur selon la revendication 1,
**caractérisé** en ce que lesdits conduits (16) sont disposés en parallèle à l'axe de rotation, et présentent un profil en travers circulaire, de préférence, à un élargissement conique.

6. Electrolyseur selon la revendication 1,
**caractérisé** en ce que lesdits tambours cathodiques (13) sont fixés par des cylindres creux (18) sur ledit arbre (4), sur lesquels sont prévus lesdits moyens de contact électrique (5, 6) dans lesdits tambours cathodiques.

7. Electrolyseur selon la revendication 1,
**caractérisé** en ce qu'un conduit en descente vers l'extérieur se trouve dans ledit couvercle (1) de la cellule, du côté d'entrée de l'électrolyte.

8. Electrolyseur selon la revendication 1,
**caractérisé** en ce que des tôles de chicane, tortueuses en sens axial, sont prévues sur la face interne de la paroi du tambour cathodique (13) du côté d'entrée de l'électrolyte.

9. Electrolyseur selon la revendication 1,
**caractérisé** en ce que lesdits moyens de contact électrique (5, 6) dans lesdits tambours cathodiques sont interconnectés, de façon électrique, l'un à l'autre et/ou connectés électriquement à des moyens de contact (12) fixés sur ledit arbre.

10. Electrolyseur selon la revendication 1,
**caractérisé** en ce que des disques (6) sont prévues dans lesdits tambours cathodiques (13), dont le rayon est égal au minimum des écarts les plus courts, ou plus petit que ceux-ci, entre l'axe de rotation et la surface de l'électrolyte, et entre l'axe de rotation et la surface des tas (9) à particules cathodiques.

11. Electrolyseur selon la revendication 1,
**caractérisé** en ce que le diamètre le plus grand des alvéoles dans ladite couche (15) aux micropores sur la paroi latérale, qui définit lesdits tambours cathodiques (13), est plus petit que le diamètre des bulles de gaz les plus petites, qui sont séparées dans l'espace anodique et cathodique.

12. Electrolyseur selon les revendications 1 et 2,
**caractérisé** en ce que la paroi de tambour (17), qui se trouve directement au point d'évacuation de l'électrolyte en dehors de la cellule, a un diamètre de ses alvéoles, qui est plus petit que le diamètre des particules cathodiques les plus petites.
